# EUROPEAN PATENT SPECIFICATION

(11) **EP 3 093 059 B1**
(45) Date of publication and mention of the grant of the patent: **26.09.2018**
(21) Application number: 16169212.4
(22) Date of filing: 11.05.2016
(51) Int. Cl.: B01D 46/00, B01L 1/04, B08B 15/00

(54) **METHOD FOR REMOVING A FILTER UNIT FROM A LABORATORY EXTRACTION HOOD, AND RELATIVE FILTERING AND SAFETY REMOVAL KIT**
VERFAHREN ZUR ENTFERNUNG EINER FILTEREINHEIT AUS EINER LABORABZUGSHAUBE, UND ZUGEHÖRIGES FILTRIERUNGS- UND SICHERHEITSENTFERNUNGSKIT
PROCÉDÉ PERMETTANT DE RETIRER UNE UNITÉ DE FILTRE À PARTIR D'UNE HOTTE D'EXTRACTION DE LABORATOIRE, ET FILTRAGE ET KIT D'ÉLIMINATION DE SÉCURITÉ ASSOCIÉS

(30) Priority: 12.05.2015 IT MI20150659
(43) Date of publication of application: 16.11.2016
(73) Proprietor: Aquaria S.r.l., 20084 Lacchiarella, Milan (IT)
(72) Inventor: Dadati, Emilio, 20084 Lacchiarella, Milan (IT); Proto, Antonio, 20084 Lacchiarella, Milan (IT); Motta, Oriana, 20084 Lacchiarella, Milan (IT)
(74) Representative: Candito, Rocco

(56) References cited:
- US-A1- 2008 278 042
- US-A1- 2013 061 567

## Description

The present invention relates to a method, a filtering and removal in safety kit for a laboratory extraction hood, and to a laboratory extraction hood.

Laboratory extraction hoods are known that are used for laboratory analyses, comprising a work table on which the samples are placed that are to be analysed inside a booth, a filter unit, through which the air flows - which is potentially contaminated by the analysed samples - which air is moved owing to the action of a motor-driven fan.

Such laboratory extraction hoods require the filter unit to be replaced periodically. Replacing a filter unit is a very delicate operation that requires extreme caution and suitable measures to protect the operator and the outer environment from possible contamination by even very hazardous substances that are located in the filter unit and which come from the analysed samples. Often, however, especially in the presence of highly hazardous contaminant substances, such as particles or fibres of asbestos or other contaminant and toxic materials, the protective methods adopted by an operator, for example gloves and masks for the operator, are not sufficient to avert the risk of contamination. For example, suitable nebulised solutions such as formalin or peroxide, which are currently used to sterilise laboratory extraction hoods before removing or replacing filters, suppress possible contaminating microorganisms but have no effect on the aforesaid asbestos fibres which, as is well known, expose the operator to a very grave risk of mesothelioma.

The operator, also unconsciously, runs resulting grave health risks and also acts himself or herself as a carrying and transmitting means of fibrous substances like asbestos, thus also causing harm to environments and people outside laboratory environments.

A prior-art laboratory extraction hood is known from US2013/061567.

There is thus a great need to improve measures for protecting operators and environments, in particular during critical operations of removing and replacing filter units of laboratory extraction hoods.

One object of the present invention is to improve known laboratory extraction hoods, and in particular to provide a specific new laboratory extraction hood for containing fibrous substances.

Another object is to provide a kit and a method that enables a filter unit to be removed from the laboratory extraction hood in total safety for the operator and the environment.

In a first aspect of the invention, a method is provided for removing a filter unit from a laboratory extraction hood in safety conditions for an operator and for the surrounding environment, as defined in claim 1.

In a second aspect of the invention, a filtering and safety removal kit for a laboratory extraction hood is provided as defined in claim 7.

The present invention further comprises a laboratory extraction hood comprising the aforesaid filtering kit, as defined in claim 11.

The invention can be better understood and implemented with reference to the attached drawings that illustrate an embodiment thereof by way of non-limiting example in which:

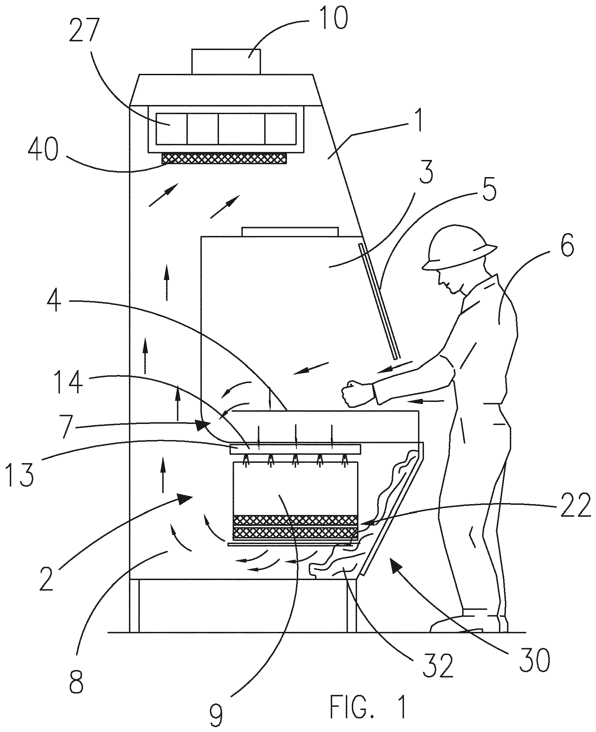

Figure 1 is a schematic and section side view of a laboratory extraction hood that includes a filtering and safety removal kit according to the invention;

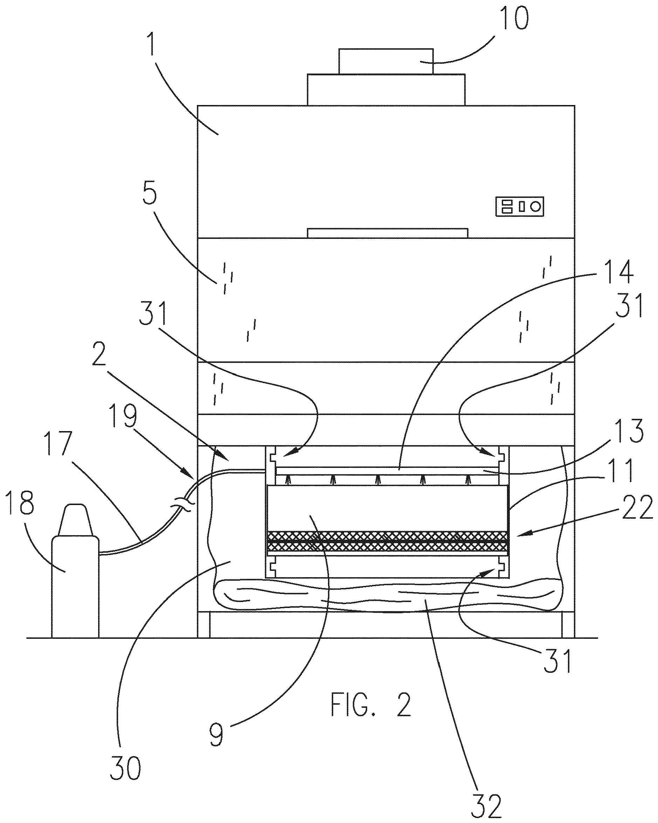

Figure 2 is a schematic front view of the laboratory extraction hood of Figure 1;

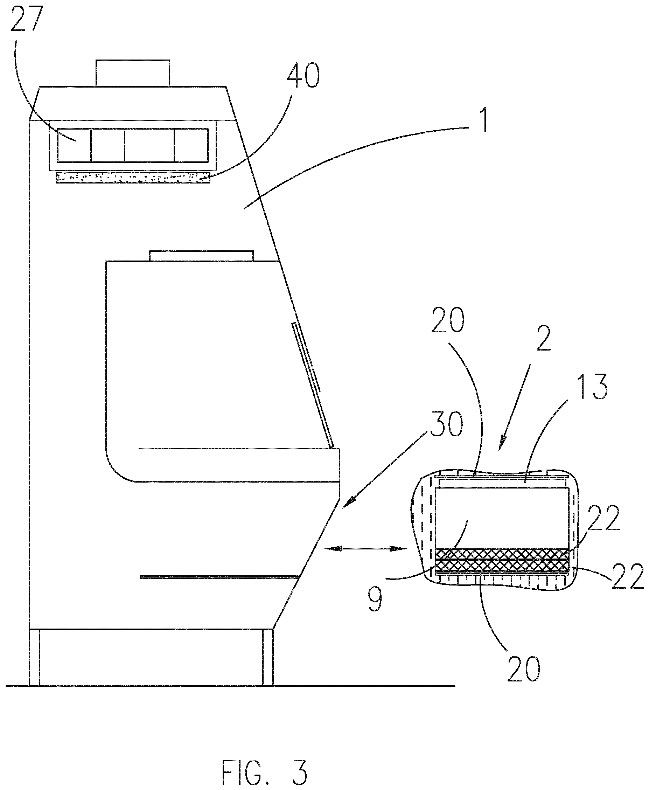

Figure 3 is another schematic view of the laboratory extraction hood;

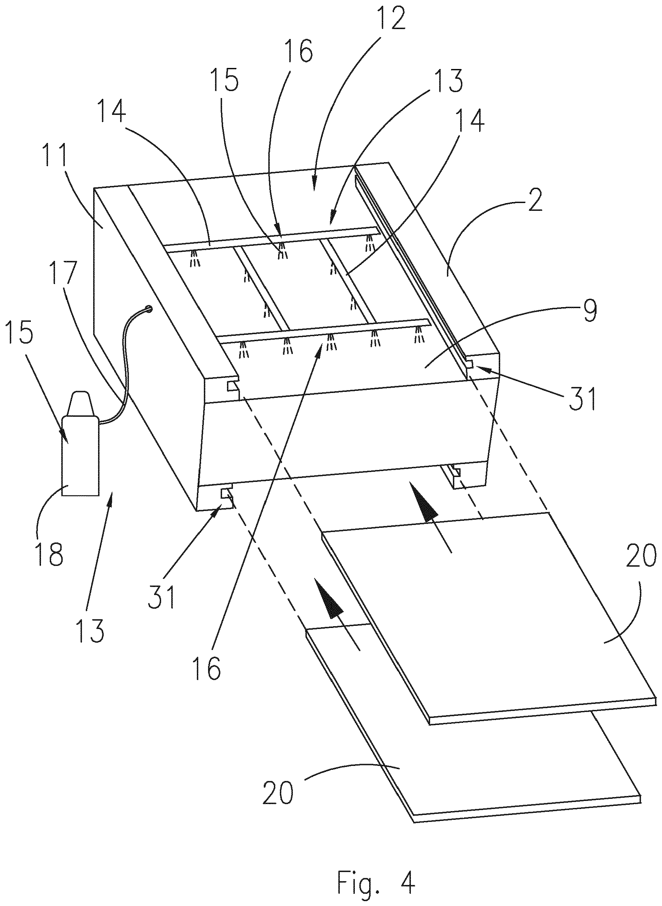

Figure 4 shows schematically a filtering and safety removal kit according to the invention that is usable in a laboratory extraction hood.

With reference to the attached Figures, a laboratory extraction hood 1 is disclosed that includes a possible embodiment by way of non-limiting example of a filtering and safety removal kit 2 of the filter unit.

The laboratory extraction hood 1 comprises a containing chamber 3 or booth, and a work table 4 made of a material with great mechanical resistance that is highly resistant to corrosion, such as a stainless steel of the AISI 316 type. The containing chamber 3 is bounded by a wall 5 provided with a front opening to enable an operator 6 to handle samples to be analysed on the work table 4.

On the work table 4 a passage 7 is obtained for conveying the air. The passage 7 extends along a zone located below a work table 4 and above a space 8 dedicated to filtering the air. During operation, the sucked air penetrates the chamber 3, is conveyed to the work table 4 and is subsequently made to flow through the passage 7 to the space 8 underneath.

In the space 8, through an access opening 30 that is closable with a removable hatch, a filter unit 9 is housable and will be disclosed in greater detail below, and which is included in the kit 2 according to the invention.

The laboratory extraction hood 1 comprises an electric aspirator 27 that has the function of sucking air from the containing chamber 3 to make the air flow first through the passage 7, then through the filter unit 9, to retain the hazardous substances, and lastly evacuate the air from the laboratory extraction hood 1 through an upper evacuation opening 10. In one embodiment that is not shown a further filter is provided that is located below the electric aspirator 27.

In particular, an active-carbon filter 40 is provided that is located in a position upstream of the electric aspirator 27 with respect to the direction of advancement of the air flow. This active-carbon filter 40 acts on the air flow being expelled before the electric aspirator 27 to retain possible acetone fumes.

The laboratory extraction hood 1 is configured for operating, if required, with a laminar flow inside the containing chamber 3. In this case, part of the air is reintroduced into the containing chamber 3 and part is evacuated to the exterior and replaced with other air taken from the exterior and introduced into the containing chamber 3.

The kit 2 includes the filter unit 9 mentioned above, which comprises one or more filters of the so-called HEPA and/or of the ULPA type and/or of the active carbon type.

The filter unit 9 is contained in a filter enclosure housing 11, having a box shape, which is suitable for being inserted into the space 8 of the laboratory extraction hood 1.

Suitable gaskets and locking knobs ensure correct positioning and a correct seal of the enclosure housing 11 and thus of the filter unit 9.

The enclosure housing 11 is open above, in particular comprises an opening zone 12 through which the filter unit 9 can receive, and interact with, the flow of air coming from the containing chamber 3, to retain the toxic contaminating substances.

The kit 2 comprises a distributing and spraying device 13 that enables the filter unit 9 to be removed in total safety for the operator 6 and for the surrounding environment.

The distributing and spraying device 13 comprises one or more spraying and distributing conduits 14, arranged near the opening zone 12, which are activated before the operations of extracting and replacing the filter unit 9. The spraying and distributing conduits 14 are configured for spraying a solidifiable encapsulating solution 15 on the surface of the filter unit 9 to fix to the latter the contaminating toxic substances which were previously retained during operation of the laboratory extraction hood 1. The spraying and distributing conduits 14, by the solution 15 that solidifies after a set period of time, prevents effectively and totally safely the separation of the contaminating toxic substances from the filter unit 9, and thus prevents the release of such substances into the environment during the operations of extracting the filter unit 9 from the laboratory extraction hood 1.

Along the spraying and distributing conduits 14 several nozzles 16 are provided that enable the solution 15 to be dispensed uniformly on the surface of the filter unit 9. A main supplying conduit 17 is provided that removably connects the spraying and distributing conduits 14 to a pressurised container 18 containing the solidifiable encapsulating solution 15.

The solidifiable encapsulating solution 15 comprises a liquid glue that is solidifiable at ambient temperature, such as a monocomponent glue in a water solution, that does not require solvents, or a liquid substance based on one or more polymers that are solidifiable at ambient temperature or another substance that is suitable for performing a function of permanent fixing of the toxic substances to the filter unit 9. In particular, a water-based solution is used that is capable of producing an encapsulating film that covers, wraps and fixes to the filter any possible deposit that has accumulated on the filter.

On an outer wall of the laboratory extraction hood 1 a connector opening 19 is obtained into which an end of the supplying conduit 17 is insertable for supplying the solution 15 to the spraying and distributing conduits 14.

The kit 2 further comprises a pair of upper and lower lamina elements 20, that are slidingly couplable with the enclosure housing 11 to insulate the filter unit 9 from the outer environment. Each lamina element 20 is insertable into suitable guides 31 located at the sides in an upper zone and a lower zone of the enclosure housing 11.

The lamina elements 20 are coupled with the enclosure housing 11 to enclose totally the filter unit 9 before it is extracted. Each lamina element 20 thus performs the function of a further barrier to the outside, further ensuring the insulation of the contaminating toxic substances with respect to the outer environment.

For even more secure and reliable protection, the laboratory extraction hood 1 can comprise, in one embodiment, an extraction system with bag 32 in which the filter unit 9 is introduced it is extracted, such as to obtain a further barrier action against the contaminating toxic substances.

The operation of the laboratory extraction hood 1, and in particular of the filtering and safety removing kit 2 is disclosed below.

Before proceeding with removing and replacing the filter unit 9, advantageously, it is possible increase, for a certain interval of time, the driving speed of the electric aspirator 27, to remove residual undesired particles or substances still possibly present on the work table 4, or in the containing chamber 3 or in the conveying passage 7 etc. For this purpose, it is possible to provide in the laboratory extraction hood 1 a suitable control operating module that not only controls operating parameters such as air, work time achieved and other parameters, but also temporary increasing of switch-on speed of the electric aspirator 27 of the laboratory extraction hood 1, and temporarily increases speed before switching off the electric aspirator 27.

Whilst the electric aspirator 27 is in function, the operation of sprinkling the filter unit 9 with the solidifiable encapsulating solution 15 is started up. Once the electric aspirator 27 is switched off, there is a wait for the solution 15 to solidify after being nebulised and deposited on the filter unit 9. At the end of a set period of time, which can vary from a few minutes to a few hours according to the specific solution 15 used, and which is sufficient for ensuring complete solidification of the solution 15, on the filter unit 9 a solid film is generated that covers the filter unit 9, performing a sort of "encapsulating" function in the filter unit 9 of the hazardous undesired substances, in particular the asbestos particles/fibres that constitute a very serious health hazard and which, otherwise, are very difficult to control because they are very volatile. This solid film permanently fixes to the filter unit 9 all the particles, fibres and microorganisms, and in general any possible harmful substance coming from the analysed sample and which are now present on the filter unit 9, preventing the release thereof into the environment.

Once the hatch has been removed from the access opening 30, each lamina element 20 is inserted into the suitable guides 31 of the enclosure housing 11. The enclosure 11, containing the filter unit 9, closed with the lamina elements 20 that are well secured in a position fixed to the filter unit 9 by the insertion of screws, is disengaged from the seat in the space 8 and dropped inside a bag 32 by which it is totally enveloped. At this point, the operator can, in total safety, evacuate the filter unit 9 from the laboratory extraction hood 1 without running any risk for his or her health and without the risk of dispersing in the environment or transporting with himself or herself and transmitting to others the toxic and/or cancerogenous substances contained in the filter unit 9. The filter unit 9, totally enclosed in the box enclosure 11, can be delivered for disposal in total safety.

From what has been said and shown in the attached drawings, it is thus clear that the invention is directed towards a method and kit for laboratory extraction hoods that enable filter extracting operations to be made safe and which achieve the objects mentioned above. In particular, owing to the invention, it is prevented, with total safety and efficacy that, upon removing the filter unit, the fibres, (which as known are invisible and highly volatile) are dispersed in the surrounding environment with consequent very grave risks to the health of not only operators but also other individuals who may come into contact therewith.

What has been said and shown in the attached drawings has been provided only by way of example of the innovative features of the filtering and removal in safety kit and of the corresponding laboratory extraction hood 1; modifications can be made to parts of the kit and/or of the laboratory extraction hood 1 without thereby falling outside the scope of the claims.

In practice, the materials, inasmuch as they are compatible with the specific use and with the respective single components for which they are intended, can be opportunely chosen according to the required requisites and according to the available prior art.

Variations on and/or additions to what has been disclosed above and illustrated in the attached drawings are possible.

## Claims

1. Method for removing a filter unit (9) from a laboratory extraction hood (1) in safety conditions for an operator and for the surrounding environment, comprising the steps of:
a) sprinkling said filter unit (9) with a solidifiable solution (15),
b) waiting for a solidification period so that said solidifiable solution (15), solidifying, prevents said filter unit (9) from releasing into the environment contaminating toxic substances such as fibres, which have been previously retained during operation of said laboratory extraction hood (1), and
c) extracting said filter unit (9) from said laboratory extraction hood (1).

2. Method according to claim 1, wherein said sprinkling comprises nebulizing said solidifiable solution (15) and applying said solidifiable solution (15), by distributing and spraying means (13, 14, 17, 18), onto the surface of said filter unit (9) so as to generate a coating film that traps said contaminating toxic substances by fixing permanently the substances to said filter unit (9).

3. Method according to claim 1 or 2, wherein said solidifiable solution (15) comprises an encapsulating water solution substance, which is solidifiable at ambient temperature, for generating an encapsulating film for the deposits on said filter unit (9).

4. Method according to any preceding claim, wherein before said step c) filter enclosure housing (11) containing said filter unit (9) is closed with lamina elements (20) which are insertable into suitable guides (31) located at the sides in an upper zone and a lower zone of said filter enclosure housing (11) to insulate the surface of said filter unit (9) from the outer environment and further prevent the release of said contaminating toxic substances into the environment.

5. Method according to any preceding claim, wherein said filter unit (9) is inserted into a safety bag (32) before being extracted from said laboratory extraction hood (1).

6. Method according to any preceding claim, wherein before said laboratory extraction hood (1) is switched on and whilst said laboratory extraction hood (1) is being started up the drive speed is increased of an electric aspirator (27) included in said laboratory extraction hood (1) to remove undesired particles or residual substances from a work table (4) of said laboratory extraction hood (1), and wherein said electric aspirator (27) is maintained driven during said step a) in which said solidifiable solution (15) is dispensed.

7. Kit (2) for filtering and safety removal for a laboratory extraction hood (1), comprising a filter enclosure housing (11) and a filter unit (9) contained in said filter enclosure housing (11) that is suitable for being inserted into a laboratory extraction hood (1), said filter enclosure housing (11) comprising an opening zone (12) through which said filter unit (9) can receive an air flow coming from a work zone (3) of said laboratory extraction hood (1), a pressurised container (18) containing a solidifiable encapsulating solution (15) that is solidifiable at ambient temperature, a supplying conduit (17) and distributing and spraying means (13, 14, 16) which is removably connectable by said supplying conduit (17) to said pressurised container (18) containing said solidifiable encapsulating solution (15), said distributing and spraying means (13, 14, 16) comprising one or more distributing conduits (14) provided with nozzles (16) for sprinkling near said opening zone (12) said solidifiable encapsulating solution (15) on the surface of said filter unit (9) for fixing to the latter possible contaminating toxic substances previously retained during operation of said laboratory extraction hood (1), so as to prevent the release of said contaminating toxic substances into the environment during the extraction of said filter unit (9) from said laboratory extraction hood (1), and further comprising two lamina elements (20), each slidably couplable with said filter enclosure housing (11) for insulating said filter unit (9) from the outer environment.

8. Kit for filtering and safety removal according to claim 7, wherein said supplying conduit (17) is arranged for removably connecting said one or more distributing conduits (14) to said pressurised container (18) containing said solidifiable encapsulating solution (15).

9. Kit for filtering and safety removal according to claims 7 or 8, wherein said filter unit (9) further comprises one or more filters of the so-called HEPA and/or ULPA and/or active carbon type.

10. Laboratory extraction hood comprising the kit according to any one of claims 7 to 9, and provided with a connector opening (19) into which an end of said supplying conduit (17) is insertable to enable said distributing and spraying conduits (13, 14, 16) to be supplied with the solidifiable encapsulating solution (15) contained in said external pressurised container (18).

11. Laboratory extraction hood according to claim 10, further comprising a bag element (32) that is suitable for enclosing said filter unit (9) to remove, in conditions of insulation from the outer environment, an active carbon filter (40) located near and upstream of an electrical aspirator (27) to retain possible acetone fumes contained in the air flow being expelled.

## Patentansprüche

1. Verfahren zum Entfernen einer Filtereinheit (9) aus einer Laborabzugshaube (1) unter Sicherheitsbedingungen für einen Bediener und für die umgebende Umwelt, umfassend die Schritte des:
a) Besprengens der Filtereinheit (9) mit einer verfestigbaren Lösung (15),
b) Abwartens eines Verfestigungszeitraums, sodass die verfestigbare Lösung (15), die sich verfestigt, die Filtereinheit (9) daran hindert, kontaminierende toxische Substanzen wie etwa Fasern, die zuvor während Betriebs der Laborabzugshaube (1) zurückgehalten wurden, in die Umwelt freizusetzen, und
c) Abziehens der Filtereinheit (9) aus der Laborabzugshaube (1).

2. Verfahren nach Anspruch 1, wobei das Besprengen das Vernebeln der verfestigbaren Lösung (15) und Aufbringen der verfestigbaren Lösung (15) über Verteil- und Sprühmittel (13, 14, 17, 18) auf die Oberfläche der Filtereinheit (9) umfasst, um einen Beschichtungsfilm zu erzeugen, der die kontaminierenden toxischen Substanzen durch dauerhaftes Fixieren der Substanzen an der Filtereinheit (9) festhält.

3. Verfahren nach Anspruch 1 oder 2, wobei die verfestigbare Lösung (15) eine verkapselnde Wasserlösungssubstanz umfasst, die bei Umgebungstemperatur verfestigbar ist, zum Erzeugen eines Verkapselungsfilms für die Ablagerungen auf der Filtereinheit (9).

4. Verfahren nach einem vorstehenden Anspruch, wobei vor dem Schritt c) Filterfassungsgehäuse (11), das die Filtereinheit (9) enthält, mit Blattelementen (20) geschlossen wird, die in an den Seiten in einem oberen Bereich und einem unteren Bereich des Filterfassungsgehäuses (11) liegende geeignete Führungen (31) einführbar sind, um die Oberfläche der Filtereinheit (9) von der Außenumwelt zu isolieren und weiter die Freisetzung der kontaminierenden toxischen Substanzen in die Umwelt zu verhindern.

5. Verfahren nach einem vorstehenden Anspruch, wobei die Filtereinheit (9) in einen Sicherheitsbeutel (32) eingeführt wird, bevor sie aus der Laborabzugshaube (1) abgezogen wird.

6. Verfahren nach einem vorstehenden Anspruch, wobei bevor die Laborabzugshaube (1) eingeschaltet wird und während die Laborabzugshaube (1) hochgefahren wird, die Antriebsgeschwindigkeit einer elektrischen Absaugung (27), die in der Laborabzugshaube (1) beinhaltet ist, erhöht wird, um unerwünschte Partikel oder Restsubstanzen von einem Arbeitstisch (4) der Laborabzugshaube (1) zu entfernen, und wobei die elektrische Absaugung (27) während des Schritts a), in dem die verfestigbare Lösung (15) ausgegeben wird, angetrieben gehalten wird.

7. Set (2) zum Filtern und sicheren Entfernen für eine Laborabzugshaube (1), umfassend ein Filterfassungsgehäuse (11) und eine im Filterfassungsgehäuse (11) enthaltene Filtereinheit (9), die dafür geeignet ist, in eine Laborabzugshaube (1) eingeführt zu werden, wobei das Filterfassungsgehäuse (11) einen Öffnungsbereich (12) umfasst, durch den die Filtereinheit (9) einen von einem Arbeitsbereich (3) der Laborabzugshaube (1) kommenden Luftstrom aufnehmen kann, einen Druckbehälter (18), der eine verfestigbare Verkapselungslösung (15) enthält, die bei Umgebungstemperatur verfestigbar ist, eine Speiseleitung (17) und Verteil- und Sprühmittel (13, 14, 16), die über die Speiseleitung (17) entfernbar mit dem Druckbehälter (18) verbindbar sind, welcher die verfestigbare Verkapselungslösung (15) enthält, wobei die Verteil- und Sprühmittel (13, 14, 16) eine oder mehrere Verteilleitungen (14) umfassen, die mit Düsen (16) zum Sprenkeln, nahe des Öffnungsbereichs (12), der verfestigbaren Verkapselungslösung (15) auf die Oberfläche der Filtereinheit (9) versehen sind, zum Fixieren möglicher kontaminierender toxischer Substanzen an der letzteren, die zuvor während Betriebs der Laborabzugshaube (1) zurückgehalten wurden, um die Freisetzung der kontaminierenden toxischen Substanzen während des Abzugs der Filtereinheit (9) aus der Laborabzugshaube (1) zu verhindern, und weiter zwei Blattelemente (20) umfassend, die jedes verschiebbar mit dem Filterfassungsgehäuse (11) gekoppelt sind, zum Isolieren der Filtereinheit (9) von der Außenumwelt.

8. Set zum Filtern und sicheren Entfernen nach Anspruch 7, wobei die Speiseleitung (17) dafür eingerichtet ist, die eine oder mehrere Verteilleitungen (14) entfernbar mit dem Druckbehälter (18) zu verbinden, welcher die verfestigbare Verkapselungslösung (15) enthält.

9. Set zum Filtern und sicheren Entfernen nach den Ansprüchen 7 oder 8, wobei die Filtereinheit (9) weiter einen oder mehrere Filter vom sogenannten HEPA- und/oder ULPA- und/oder Aktivkohletyp umfasst.

10. Laborabzugshaube, die das Set nach einem der Ansprüche 7 bis 9 umfasst und mit einer Verbinderöffnung (19) versehen ist, in die ein Ende der Speiseleitung (17) einführbar ist, um den Verteil- und Sprühleitungen (13, 14, 16) zu ermöglichen, mit der verfestigbaren Verkapselungslösung (15) gespeist zu werden, die im externen Druckbehälter (18) enthalten ist.

11. Laborabzugshaube nach Anspruch 10, weiter ein Beutelelement (32) umfassend, das dafür geeignet ist, die Filtereinheit (9) zu umschließen, um einen nahe und stromaufwärts einer elektrischen Absaugung (27) liegenden Aktivkohlefilter (40) unter Isolierungsbedingungen von der Außenumwelt zu entfernen, um mögliche Acetondämpfe, die im ausgestoßenen Luftstrom enthalten sind, zurückzuhalten.

## Revendications

1. Procédé permettant de retirer une unité de filtre (9) d'une hotte d'extraction de laboratoire (1) dans des conditions de sécurité pour un opérateur et pour le milieu environnant, comprenant les étapes de :
a) arrosage de ladite unité de filtre (9) avec une solution pouvant se solidifier (15),
b) attente pendant une période de solidification de sorte que ladite solution pouvant se solidifier (15), en se solidifiant, empêche ladite unité de filtre (9) de libérer dans l'environnement des substances toxiques contaminantes telles que des fibres, qui ont été précédemment retenues pendant l'utilisation de ladite hotte d'extraction de laboratoire (1), et
c) extraction de ladite unité de filtre (9) de ladite hotte d'extraction de laboratoire (1).

2. Procédé selon la revendication 1, dans lequel ledit arrosage comprend la nébulisation de ladite solution pouvant se solidifier (15) et l'application de ladite solution pouvant se solidifier (15), par des moyens de distribution et de pulvérisation (13, 14, 17, 18), sur la surface de ladite unité de filtre (9) de façon à générer un film de revêtement qui piège lesdites substances toxiques contaminantes en fixant de façon permanente les substances à ladite unité de filtre (9).

3. Procédé selon la revendication 1 ou 2, dans lequel ladite solution pouvant se solidifier (15) comprend une substance de solution aqueuse encapsulante, qui peut se solidifier à température ambiante, permettant de générer un film encapsulant pour les dépôts sur ladite unité de filtre (9).

4. Procédé selon une quelconque revendication précédente, dans lequel avant ladite étape c) le logement de l'enceinte de filtre (11) contenant ladite unité de filtre (9) est fermé par des éléments stratifiés (20) qui sont insérables dans des guides adaptés (31) situés sur les côtés dans une zone supérieure et une zone inférieure dudit logement de l'enceinte de filtre (11) pour isoler la surface de ladite unité de filtre (9) de l'environnement extérieur et empêcher davantage la libération desdites substances toxiques contaminantes dans l'environnement.

5. Procédé selon une quelconque revendication précédente, dans lequel ladite unité de filtre (9) est insérée dans un coussin de sécurité (32) avant d'être extraite de la hotte d'extraction de laboratoire (1).

6. Procédé selon une quelconque revendication précédente, dans lequel avant que ladite hotte d'extraction de laboratoire (1) soit allumée et pendant que ladite hotte d'extraction de laboratoire (1) est démarrée la vitesse d'entraînement d'un aspirateur électrique (27) inclus dans ladite hotte d'extraction de laboratoire (1) est augmentée pour éliminer les particules ou les substances résiduelles non souhaitées d'une table de travail (4) de ladite hotte d'extraction de laboratoire (1), et dans lequel ledit aspirateur électrique (27) est maintenu entraîné pendant ladite étape a) dans laquelle ladite solution pouvant se solidifier (15) est dispensée.

7. Kit (2) permettant le filtrage et l'élimination de sécurité pour une hotte d'extraction de laboratoire (1), comprenant un logement d'enceinte de filtre (11) et une unité de filtre (9) contenue dans ledit logement d'enceinte de filtre (11) qui est adapté pour être inséré dans une hotte d'extraction de laboratoire (1), ledit logement d'enceinte de filtre (11) comprenant une zone d'ouverture (12) à travers laquelle ladite unité de filtre (9) peut recevoir un flux d'air provenant d'une zone de travail (3) de ladite hotte d'extraction de laboratoire (1), un réservoir pressurisé (18) contenant une solution encapsulante pouvant se solidifier (15) qui peut se solidifier à température ambiante, une conduite d'alimentation (17) et un moyen de distribution et de pulvérisation (13, 14, 16) qui est connectable de manière amovible par ladite conduite d'alimentation (17) audit réservoir pressurisé (18) contenant ladite solution encapsulante pouvant se solidifier (15), ledit moyen de distribution et de pulvérisation (13, 14, 16) comprenant une ou plusieurs conduites de distribution (14) pourvues de buses (16) pour arrosage à proximité de ladite zone d'ouverture (12) avec ladite solution encapsulante pouvant se solidifier (15) sur la surface de ladite unité de filtre (9) pour fixer à cette dernière de possibles substances toxiques contaminantes préalablement retenues pendant l'utilisation de ladite hotte d'extraction de laboratoire (1), de manière à empêcher la libération desdites substances toxiques contaminantes dans l'environnement pendant l'extraction de ladite unité de filtre (9) de ladite hotte d'extraction de laboratoire (1), et comprenant en outre deux éléments stratifiés (20), chacun pouvant être couplé de manière coulissante audit logement d'enceinte de filtre (11) pour isoler ladite unité de filtre (9) de l'environnement extérieur.

8. Kit permettant le filtrage et l'élimination de sécurité selon la revendication 7, dans lequel ladite conduite d'alimentation (17) est agencée pour connecter de manière amovible lesdites une ou plusieurs conduites de distribution (14) audit réservoir pressurisé (18) contenant ladite solution encapsulante pouvant se solidifier (15).

9. Kit permettant le filtrage et l'élimination de sécurité selon les revendications 7 ou 8, dans lequel ladite unité de filtre (9) comprend en outre un ou plusieurs filtres du type dit HEPA et/ou ULPA et/ou à charbon actif.

10. Hotte d'extraction de laboratoire comprenant le kit selon l'une quelconque des revendications 7 à 9, et pourvue d'une ouverture de connecteur (19) dans laquelle une extrémité de ladite conduite d'alimentation (17) est insérable pour permettre auxdites conduites de distribution et de pulvérisation (13, 14, 16) de recevoir la solution encapsulante pouvant se solidifier (15) contenue dans ledit réservoir pressurisé externe (18).

11. Hotte d'extraction de laboratoire selon la revendication 10, comprenant en outre un élément de coussin (32) qui est adapté pour contenir ladite unité de filtre (9) à retirer, dans des conditions d'isolation de l'environnement extérieur, un filtre à charbon actif (40) situé à proximité et en amont d'un aspirateur électrique (27) pour retenir de possibles vapeurs d'acétone contenues dans le flux d'air expulsé.
